Europäisches Patentamt

European Patent Office

Office européen des brevets

(11) Publication number: **0 272 024**
A2

(12) **EUROPEAN PATENT APPLICATION**

(21) Application number: 87310679.3

(22) Date of filing: 04.12.87

(51) Int. Cl.4: **B29C 51/14** , B29C 51/04 , B29C 67/14

(30) Priority: 19.12.86 GB 8630385

(43) Date of publication of application:
22.06.88 Bulletin 88/25

(84) Designated Contracting States:
AT BE CH DE ES FR GB GR IT LI LU NL SE

(71) Applicant: **Verta Miles Limited**
**Unit 2 Corbett Industrial Estate Corbett**
**Street**
**Manchester M11 4BD(GB)**

(72) Inventor: **James, David**
**33 Lever Street**
**Radcliffe Manchester(GB)**

(74) Representative: **Lawrence, John Gordon et al**
**McNeight & Lawrence Regent House Heaton**
**Lane**
**Stockport, Cheshire SK4 1BS(GB)**

(54) Methods for the production of shell-like mouldings.

(57) There is disclosed a method and apparatus for the production of a shell-like moulding from a fabric faced laminate. The laminate is forced against the surface of a mould cavity by one or more membranes which are inflated on the side of the laminate remote from the mould cavity. Movement of the laminate towards the surface of the cavity can be assisted by vacuum suction applied within the cavity and by mechanical means which carry selected areas of the laminate into engagement with the surface of the mould cavity prior to inflation of any membrane.

EP 0 272 024 A2

# METHODS FOR THE PRODUCTION OF SHELL-LIKE MOULDINGS

This invention concerns methods for the production of flexible, semi-rigid or rigid shell-like mouldings, particularly, though by no means exclusively, those suitable for the production of seat cushions for the automotive industry.

Car seat cushions have traditionally been provided with fabric or leather (artificial or real) upholstered covers formed from a plurality of pieces sewn together to give the required three-dimensional form. The cutting and sewing of the pieces is highly labour intensive and therefore costly.

It is now known to mould from a fabric faced laminate by, for example, a vacuum moulding technique a shell-like form which is filled with foam before removal from the mould to form a complete car seat cushion. A problem with such a cushion is that its detailed shape may be constrained by the moulding technique employed unless the fabric cover is to be stretched in an unnatural way during the moulding giving an appearance less pleasing than that presented by cushions upholstered in the traditional way. A particular difficulty is the moulding of any part where wall portions of the shell have an included angle of less than ninety degrees.

It is an object of the present invention to provide moulding methods which overcome, at least to some extent, the problem aforesaid.

According to the present invention there is provided a method for the production of a shell-like moulding comprising the steps of providing a hollow mould cavity, laying a fabric-faced laminate over the mould cavity and inflating at least one membrane on the side of the laminate remote from the mould cavity to push the laminate against the surface of the mould cavity.

There may be a plurality of side-by-side membranes on the side of the laminate remote from the cavity adapted to act on different areas of the laminate either simultaneously or in a desired sequence.

The laminate may be tensioned over the cavity so that it is drawn into the cavity in a controlled manner.

The laminate may be assisted to move against the surface of the mould cavity by additional means such as the application of vacuum suction through holes in the surface of the mould cavity or mechanical means which carry selected areas of the laminate into engagement with the surface of the mould cavity.

The invention also includes apparatus for carrying out the methods aforesaid.

The invention will be further apparent from the following description with reference to the figures of the accompanying drawings, which show, by way of example only, one form of apparatus embodying the invention and for practising the method thereof.

Of the drawings :-

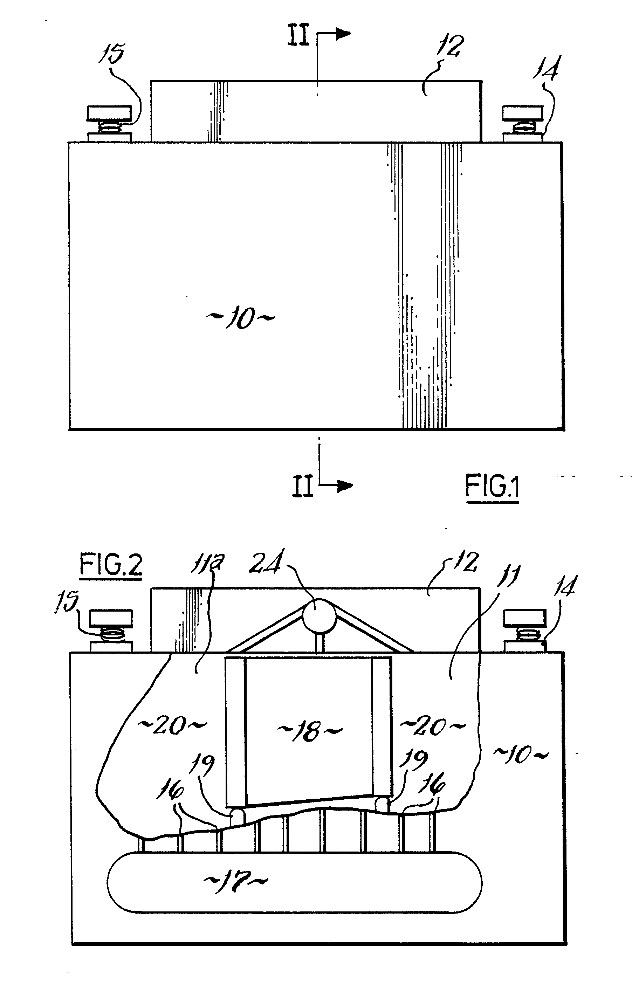

Figure 1 shows a side view of the apparatus;

Figure 2 shows a cross-section through the apparatus on the line II-II of Figure 1; and

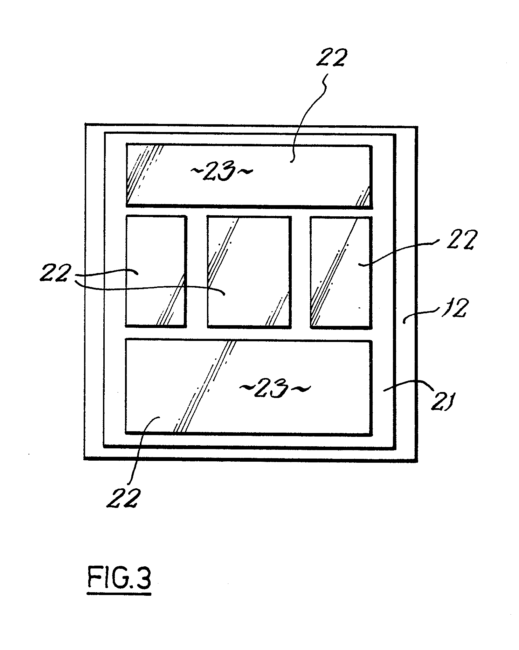

Figure 3 shows an underneath plan view of the lid of the apparatus of Figure 1.

Referring now to the drawings, it will be seen that the apparatus essentially comprises a mould consisting of a block 10 having a female or hollow mould cavity 11 machined therein and a lid 12 hingedly connected to the block 10 and adapted in its closed position to overlie the cavity 11.

Heating elements (not shown) are provided for heating the block 10 to a desired temperature.

A frame 14 resiliently loaded downwardly by spring means 15 or pneumatic pressure is also hingedly connected to the block 10 and in its operative position bears against the rim of the block 10 to surround the cavity 11.

There are a plurality of orifices 16 in the surface of the mould cavity 11 which can be connected with a vacuum source by means of a plenum chamber 17 within the block 10.

A loose former 18 may be positioned within the cavity 11 to engage with ribs 19 on the surface of the cavity. The former 18 divides the cavity 11 into a number of separate compartments 20.

The underside of the lid 12 is divided by a gasket member 21 into a series of zones 22 overlying (when the lid is closed) the compartments 20. Each zone 22 is defined by a resilient membrane 23 secured by the gasket member 21 and which can be inflated by a source of pressure air applied through a manifold 24 within the lid 12.

In use, with the lid 12 and frame 14 hinged away from the block 10 which has been pre-heated to a required temperature, a sheet of laminate including an outer layer of fabric and a backing consisting of polyurethane foam joined by a thermoforming resin is laid (fabric face down) over the cavity 11 and the frame 14 swung over to its operative position. The former 18 is positioned in the cavity to hold linear strips of the laminate against the ribs 19. The lid 12 is closed and suction is applied through orifices 16 at the same time as the membranes 23 are inflated all whereby the laminate is carried to the surface of the mould cavity whilst tensioned by the effect of frame 14. The inflation of membranes 23 carries the laminate into undercut portions of the cavity such as indicated at 11a where adjacent walls have an included angle of less than 90°.

The completed shell-moulding which may form the cover for a car seat cushion may be filled with foam before removal from the cavity 11 if desired.

It will be appreciated that it is not intended to limit the invention to the above example only, many variations, such as might readily occur to one skilled in the art, being possible, without departing from the scope thereof as defined by the appended claims.

It will be appreciated that it is not intended to limit the invention to the above example only, many variations, such as might readily occur to one skilled in the art, being possible, without departing from the scope thereof as defined by the appended claims.

Thus, for example, the former 18 need not be loose and may be fixed to the underside of the lid 12.

## Claims

1. A method for the production of a shell-like moulding comprising the steps of providing a hollow mould cavity, laying a fabric faced laminate over the mould cavity and inflating at least one membrane on the side of the laminate remote from the mould cavity to push the laminate aginst the surface of the mould cavity.

2. A method according to claim 1 wherein there are a plurality of side-by-side membranes on the side of the laminate remote from the cavity adapted to act on different areas of the laminate.

3. A method according to claim 2 wherein said plurality of side-by-side membranes are inflated simultaneously.

4. A method according to claim 2 wherein said plurality of side-by-side membranes are inflated in a desired sequence.

5. A method according to any preceding claim wherein the laminate is tensioned over the cavity so that it is drawn into the cavity in a controlled manner.

6. A method according to any preceding claim wherein the laminate is assisted to move against the surface of the mould cavity by the application of vacuum suction through holes in the surface of the mould cavity.

7. A method according to any preceding claim wherein the laminate is assisted to move against the surface of the mould cavity by mechanical means which carry selected areas of the laminate into engagement with the surface of the mould cavity prior to inflation of any membrane.

8. A method according to claim 7 wherein said mechanical means divides the mould cavity into compartments, ther being one membrane operable in each compartment.

9. Apparatus for the production of a shell-like moulding comprising a hollow mould cavity, lid means for covering said cavity, at least one membrane on the inner surface of said lid means which can be inflated to force a laminate which has been positioned between the mould cavity and the lid means against the surface of the mould cavity.

10. Apparatus according to claim 8 wherein there are a plurality of side-by-side membranes on the inner surface of said lid means which membranes can be inflated in a desired sequence or simultaneously.

11. Apparatus according to either claim 8 or claim 9 wherein means is provided to tension said laminate over the mould cavity so that it is drawn into the cavity in a controlled manner.

12. Apparatus according to any one of claims 8 to 10 inclusive including means for applying vacuum suction to the interior of the mould cavity to assist movement of the laminate towards the surface of the mould cavity.

13. Apparatus according to any one of claims 8 to 11 inclusive including mechanical means for carrying selected areas of the laminate into engagement with the surface of the mould cavity prior to inflation of any membrane.

14. Apparatus according to claim 12 wherein said mechanical means divides the mould cavity into compartments, there being one membrane operable in each compartment.

II →  12  14

15

~10~

II →  FIG.1

FIG.2  11  24  12  11  14

15

~20~  ~18~  ~20~  ~10~

19  19

16  16

~17~

FIG.3